# FASCICULE DE BREVET EUROPEEN

(11) **EP 4 344 846 B1**
(45) Date de publication et mention de la délivrance du brevet: **28.10.2026**
(21) Numéro de dépôt: 23199768.5
(22) Date de dépôt: 26.09.2023
(51) Int. Cl.: B29C 44/58, B29C 45/73, B29C 45/37, B29C 33/38, B29C 33/02, B29C 44/34, B29C 44/44

(54) **CHAMBRE POUR LE MOULAGE À LA VAPEUR DE MATÉRIAUX EXPANSÉS OU ALVÉOLAIRES OU MOUSSES**
KAMMER ZUM DAMPFFORMEN VON GESCHÄUMTEN ODER GESCHÄUMTEN MATERIALIEN ODER SCHAUMSTOFFEN
CHAMBER FOR THE VAPOUR MOULDING OF FOAMED OR FOAMED MATERIALS

(30) Priorité: 27.09.2022 FR 2209768; 04.04.2023 FR 2303342
(43) Date de publication de la demande: 03.04.2024
(73) Titulaire: Knauf Industries Gestion, 68600 Wolfgantzen (FR)
(72) Inventeur: GRAND, Fabrice, 68600 Wolfgantzen (FR)
(74) Mandataire: Kirkpatrick

(56) Documents cités:
- WO-A1-2010/083769
- DE-U1- 202012 100 504
- FR-A1- 2 581 585
- US-A- 4 225 109
- US-A- 5 454 703
- US-A1- 2010 193 985

## Description

### Domaine de l'invention

L'invention concerne, de manière générale, le moulage à la vapeur de matériaux expansés ou alvéolaires ou mousses. Plus particulièrement l'invention concerne un procédé de fabrication d'une chambre pour le moulage à la vapeur de matériaux expansés ou alvéolaires ou mousses comprenant une enceinte comprenant au moins deux parties, au moins une partie étant mobile pour permettre son ouverture et sa fermeture, l'enceinte comprenant au moins une arrivée de vapeur, et au moins un injecteur de billes alvéolaires, les surfaces de l'enceinte et/ou l'arrivée de vapeur sont au moins en partie recouvertes par un revêtement isolant thermique.

### Arrière plan de la technique

Traditionnellement, des moules en aluminium sont utilisés pour la fabrication de pièces moulées en mousses expansées ou alvéolaires, par exemple le polystyrène expansé. Ces moules sont intégrés dans des chambres à vapeur en aluminium ou en acier subissant de multiples variations de température lors de leur fonctionnement. En particulier, après l'injection de billes ou perles alvéolaires dans les empreintes d'un moule, de la vapeur est injectée pour chauffer et éventuellement expanser les billes contenues dans le moule pour obtenir un corps ayant la forme impartie par les empreintes. Les empreintes sont en effet microperforées pour permettre à la vapeur de pénétrer au cœur du matériau. S'en suit une phase de refroidissement du moule pour stabiliser le corps moulé avant de le retirer en ouvrant le moule. Chaque cycle dure quelques dizaines de secondes à quelques minutes et la température est alternativement portée, pour le moulage de polystyrène expansé par exemple, à 110-120 °C par injection de vapeur sous pression dans la chambre et le moule, puis réduite à 80 °C par décompression et/ou spray d'eau pour figer la pièce. Toutefois, ces variations incessantes de température causent des dispersions importantes d'énergie dans le dispositif de moulage et la chambre à vapeur généralement en acier ou aluminium, d'une part à cause de la masse importante de métal présent dans l'outil (plusieurs centaines de kilogrammes d'acier et d'aluminium), et également à cause du volume important de vapeur circulant dans la chambre. Au final, moins de 10% de l'énergie apportée est utilisée pour le moulage de la matière alvéolaire.

Certains fabricants ont cherché à réduire la déperdition énergétique en isolant la chambre et ou les moules. Néanmoins, cette approche induit la formation de condensation dans le moule, qui est néfaste à la qualité du produit final, cela pouvant provoquer des défauts de remplissage sur les cycles suivants induisant des défauts sur les pièces suivantes par manque de remplissage dans le moule. En effet, on peut par exemple observer l'apparition d'un film d'eau sur les empreintes empêchant l'air de s'échapper correctement lors de l'introduction de matière dans l'empreinte au cycle suivant créant ainsi des micro-poches d'air empêchant les billes alvéolaires de se placer correctement dans l'empreinte. Il en résulte des pièces malformées et/ou de densité non homogène.

De tels moules pour fabriquer des produits moulés par un procédé vapeur sont par exemple décrits dans JP3874708. La chambre vapeur 109 et le moule à l'intérieur duquel sont placées des empreintes décrits dans ce document, repris ici à la figure 1, comprennent notamment un matériau de protection 107 résistant à l'eau, ici une couche d'acier inoxydable, et un matériau d'isolation thermique 108 , ici une couche d'amiante, résistant à la compression fixées contre les plaques arrières 106 de la chambre vapeur 109, plaques maintenues à distance entre les deux parties complémentaires du moule 102 et 103 par des supports 105. La couche 107 de matériau résistant à l'eau permet de protéger la couche d'isolation de l'humidité en repoussant cette humidité grâce à des propriété hydrophobes. La surface de cette couche doit être lisse pour permettre à la condensation d'être drainée efficacement. Il est primordial que la couche isolante 108 soit résistante à la compression puisqu'elle supporte le moule et donc les empreintes, et assure la justesse de la forme du produit expansé. Les couches de matériau 107 et 108 sont fixés à l'aide de boulons entre la plaque arrière et le bord des plaques latérales 112 et 113. Ces plaques latérales ne sont pas isolées par les matériaux 107 et 108.

Un tel moule permet de réduire la quantité de vapeur requise pour le chauffage et l'expansion du matériau. Un inconvénient de ce type de moule est qu'il ne permet pas de contrôler la condensation de la vapeur à l'intérieur du moule. Or, la présence de condensation peut occasionner défauts de remplissage des produits suivants.

D'autres inconvénients peuvent être évoqués concernant la condensation. Lors de l'éjection de la pièce moulé, il est connu d'utiliser deux types d'éjecteur : éjecteur mécanique et/ou injection d'air. Lorsque l'air est envoyé via les orifices de vapeur pour éjecter la pièce moulée, des gouttelettes d'eau vont aussi être projetées sur les pièces. Cette humidité va poser un problème de conservation lorsque du stockage des pièces dans des sachets plastiques par exemple. Ces pièces doivent donc subir des étapes additionnelles de séchage avant de pouvoir les stocker. De plus, les billes alvéolaires telle que le polystyrène absorbent l'humidité ce qui induit des variations de poids allant jusqu'à 10% du poids. Cela nuit fortement à la qualité du produit, qui doit généralement répondre à des critères précis d'humidité. Il est donc important de générer le moins d'eau possible dans la pièce moulée afin d'éviter de l'alourdir.

Il a été proposer d'évacuer la condensation à l'aide d'une pompe de drainage. C'est par exemple ce qui est décrit dans le document EP2227366 où le condensat de vapeur formé dans la chambre est aspiré. L'inconvénient de ce moule est l'utilisation d'énergie supplémentaire pour le fonctionnement d'un tel dispositif ce qui ajoute un coût supplémentaire sur le produit final.

La demande WO 2010/083769 décrit une chambre pour le moulage à la vapeur de matériaux expansés ou alvéolaires ou mousses comprenant une enceinte. Les surfaces de l'enceinte et/ou l'arrivée de vapeur sont au moins en partie recouvertes par un revêtement isolant thermique qui est formé par une maille en écaille de tortue fixée à l'aide de rivets aux parois de la chambre. Un désavantage de cette solution est que l'application du revêtement formé par une maille en écaille de tortue réduit considérablement l'espace de la chambre pour la fabrication des objets à mouler. De plus l'application à l'aide de rivets est une opération coûteuse.

La demande US 2010/0193985 décrit également une chambre pour le moulage à la vapeur de matériaux expansés ou alvéolaires ou mousses comprenant une enceinte. Les surfaces de l'enceinte de la chambre sont, au moins en partie, formées par de l'aluminium expansé qui augmente l'isolation thermique de la chambre. Un désavantage de cette solution est qu'elle fragilise la structure de la chambre.

L'invention a pour objet de réaliser une chambre pour le moulage à la vapeur de matériaux expansés ou alvéolaires ou mousses qui offre une bonne isolation thermique tout en respectant l'espace de fabrication et sans faire appel à une solution coûteuse.

### Résumé de l'invention

A cette fin, l'invention concerne un procédé de fabrication d'une chambre pour le moulage par expansion à la vapeur de matériaux expansés ou alvéolaires ou mousses qui est caractérisée en ce que le revêtement isolant thermique est formé par une couche isolante d'épaisseur allant de quelques microns à quelques millimètres. .

L'invention est caractérisée en ce que le revêtement isolant appliqué sur la surface intérieure de l'enceinte est recouvert par une plaque en matériau conducteur thermique. Il a en effet été constaté que l'isolation interne d'une chambre vapeur induit la formation de condensation à l'intérieur de la chambre. La demanderesse a identifié, de manière surprenante, que recouvrir l'isolant thermique avec une plaque en matériau conducteur thermique palie ce problème en empêchant la condensation de se former.

Le matériau conducteur thermique comprend de préférence du métal, il peut s'agir de métal pur ou d'un composite. De préférence, ce métal est de l'aluminium, du cuivre et/ou de l'inox. De préférence, la plaque en matériau conducteur thermique (19) comprend de l'aluminium, du cuivre et/ou de l'inox. Dans un mode particulier, la plaque est en aluminium, en cuivre et/ou en inox.

La présence de cette plaque en matériau conducteur thermique permet de limiter les variations de températures de la surface interne de l'enceinte. Ainsi, non seulement il n'est plus nécessaire de chauffer plusieurs centaines de kilogrammes de métal (le cadre de la chambre) grâce à la couche isolante, mais, lors de l'étape de refroidissement, la plaque interne de matériau conducteur conserve une température suffisamment élevée durant la phase de refroidissement du moule pour éviter la condensation de la vapeur au cycle suivant. Il en résulte non seulement un gain énergétique considérable, mais un système d'évacuation de la condensation n'est plus utile.

Cela permet en outre de diminuer les temps de cycle tout en optimisant le procédé de moulage vapeur avec un gain énergétique et économique nettement supérieur aux systèmes existants mais aussi permet de réduire l'empreinte carbone du process de moulage à la vapeur de matériaux expansés ou alvéolaires ou mousses.

La chambre pour le moulage à vapeur de matériaux expansés ou alvéolaires ou mousses peut désigner indifféremment une chambre traditionnelle à l'intérieur de laquelle est agencé un moule avec des empreintes perforées ou une chambre avec un moule dit « monobloc » avec des empreintes perforées, c'est-à-dire une chambre dont les parois (de l'enceinte) sont confondues avec le moule, ou un système hybride. Dans tous les cas, l'enceinte comprend un moule avec au moins une empreinte perforée.

L'empreinte perforée est l'élément servant à obtenir la forme de pièce désirée. De préférence, l'empreinte est constituée d'une partie poinçon et d'une partie matrice qui délimitent, lorsqu'ils sont associés la forme de la pièce à mouler. L'intérieur des empreintes est destiné à être en contact avec les matériaux expansés ou alvéolaires ou mousses. Les perforations de l'empreinte sont dimensionnées de façon à être plus petites que les billes de matériau alvéolaire, mais suffisamment grand pour permettre le passage de vapeur à travers ces billes.

L'enceinte et le moule peuvent être deux éléments distincts ou le moule peut, au moins en partie, être confondu avec l'enceinte.

L'enceinte désigne un volume délimité par une enveloppe rigide, défini par exemple par un cadre et des parois. L'enceinte a, de préférence, une forme parallélépipède rectangle. Dans un mode particulier, l'enceinte est un cube.

L'enceinte comprend au moins deux parties dont au moins une partie est mobile pour permettre son ouverture et sa fermeture. Généralement, une partie fixe coopère avec la partie mobile lors de son fonctionnement pour assurer la stabilité du système.

A chaque partie de l'enceinte est associée une partie du moule. Une partie du moule supporte une partie poinçon de l'empreinte composée de relief. L'autre partie du moule supporte la partie matrice de l'empreinte perforée, agencée pour être complémentaire du poinçon lors de la fermeture de l'enceinte. Ainsi, l'ouverture de l'enceinte permet l'ouverture du moule et des empreintes pour l'éjection des pièces moulées lorsque l'enceinte était fermée, de façon classique, bien connue de l'homme du métier.

L'enceinte comprend des systèmes de connexions fluidiques entre l'intérieur de l'enceinte et l'extérieur de l'enceinte, de préférence agencés sur les faces latérales de l'enceinte, tels qu'au moins une arrivée d'eau, au moins une arrivée de vapeur, et au moins un injecteur des billes alvéolaires. Ces systèmes de connexions permettent d'amener directement les différentes matières vers l'intérieur de l'enceinte, lorsque celle-ci est fermée. De préférence, l'enceinte comprend également au moins un conduit pour l'application du vide.

De préférence, l'arrivée d'eau est disposée sur une face latérale de l'enceinte. Elle est reliée à une source d'eau et permet de conduire de l'eau à l'intérieur de l'enceinte, de préférence sous forme de pulvérisateur ou spray orienté vers au moins une empreinte. L'arrivée d'eau participe au système de refroidissement pour refroidir l'intérieur de la cavité du moule afin de figer la pièce moulée avant l'étape de stabilisation par le vide pour retirer les résidus d'eau et de vapeur préalable à l'éjection de la pièce. L'arrivée d'eau est agencée pour fonctionner de façon discontinue et est bien connue de l'homme du métier.

De préférence, l'injecteur de billes alvéolaires est placé sur une face latérale de l'enceinte pour conduire des billes alvéolaires à l'intérieur d'au moins une empreinte perforée du moule. L'injecteur de billes est agencé pour fonctionner de façon discontinue et est bien connu de l'homme du métier.

De préférence, l'arrivée de vapeur est placée sur une face latérale de l'enceinte pour permettre l'introduction de vapeur dans l'enceinte, de préférence vers au moins une empreinte. L'arrivée de vapeur débouche dans l'enceinte au niveau d'une entrée de vapeur. Dans certains cas, l'arrivée de vapeur peut également fonctionner comme une arrivée d'air, pour participer à l'éjection de la pièce de l'empreinte lors de son ouverture.

De préférence, au moins un déflecteur de vapeur est agencé dans l'enceinte face à l'entrée de vapeur pour garantir une dispersion plus rapide de la vapeur dans l'enceinte. Le déflecteur est par exemple positionné à quelques centimètres de l'entrée de vapeur, de préférence au plus à 10 mm de distance, de préférence 5mm.

De préférence, l'enceinte comprend un cadre assurant sa rigidité. Par exemple, ce cadre peut être en aluminium, ou en toute autre matière assurant la rigidité. Le cadre peut en outre comporter des moyens de renfort.

Les parois de l'enceinte peuvent être fabriquées dans le même matériau que le cadre, ou dans un autre matériau.

Avantageusement, l'épaisseur de l'enceinte peut être comprise entre 10 et 40 mm, de préférence entre 20 et 30 mm.

En mode opérationnel, l'enceinte peut avoir deux positions, une position ouverte et une position fermée.

Avantageusement, des moyens de fermeture sont prévus pour maintenir l'enceinte fermée de façon étanche pendant les injections successives de billes dans les empreintes, de vapeur et d'eau vers les empreintes.

La chambre de l'invention se caractérise par le fait que la surface intérieure de l'enceinte est au moins en partie recouverte d'une couche d'isolant. De préférence, l'enceinte est recouverte au moins à 50% par une couche d'isolant, de préférence au moins à 70% par une couche d'isolant, de préférence au moins à 90% par une couche d'isolant et de préférence encore intégralement.

Si l'isolant est un matériau relativement rigide, la couche d'isolant peut être assemblée à l'intérieur de l'enceinte par un système de tenon et mortaise au niveau des angles afin d'éviter l'accès de la vapeur aux arêtes et/ou aux coins du cadre, et ainsi éviter la formation de condensation.

Avantageusement, une couche d'isolant désigne de façon large une ou plusieurs couches d'isolants superposées, éventuellement de natures différentes. Cela permet d'augmenter et/ou de combiner les propriétés thermiques de l'isolant.

Un isolant peut être un matériau flexible ou rigide éventuellement expansé, alvéolaire ou en mousse, comme ceux couramment utilisés dans d'autres applications d'isolation (laines minérales, polystyrène, polyuréthane, résine ou verre époxy ...), et/ou un revêtement isolant, et/ou des matériaux textiles comme des tissus non-tissés.

L'isolant peut avoir une épaisseur totale comprise entre 1 et 45mm, selon le type d'isolant utilisé. Par exemple, lorsqu'il s'agit d'un matériau expansé, alvéolaire ou en mousse, l'épaisseur peut être comprise entre 15 et 45 mm, de préférence entre 20 et 30 mm. Lorsqu'il s'agit d'un revêtement isolant, l'épaisseur nécessaire est généralement moindre pour obtenir une conductivité thermique comparable, par exemple entre 1 mm et 10 mm, de préférence entre 1.5 mm et 5 mm.

L'isolant est choisi selon des critères techniques tels qu'une bonne résistance thermique et mécanique, un faible coefficient de dilatation, et une bonne stabilité à la chaleur et à l'humidité au cours du temps d'utilisation.

Un isolant de type matériau expansé, alvéolaire ou en mousse a de préférence une densité comprise entre 1.70 et 2 g/cm³.

Un revêtement isolant, ici isolant thermique, désigne de préférence un matériau fluide ou semi-fluide qui peut être étalée, selon l'invention, à l'aide d'un pinceau ou d'un rouleau à peinture ou projetée (à l'aide d'un spray o un pistolet à peinture), pour obtenir, après séchage, une couche isolante d'épaisseur allant de quelques microns à quelques millimètres. Plusieurs couches peuvent être appliquées l'une sur l'autre, moyennant un temps de séchage entre les applications.

De préférence, le revêtement isolant thermique comprend des particules de matériau isolant, de préférence des particules minérales comme de la céramique ou du verre. Il s'agit par exemple de microsphères isolantes à microbulle, de microsphères creuses en verre, par exemple en borosilicate, de micro-corps creux en céramique, ...

Ces particules sont mises en suspension dans une base aqueuse polymérique pouvant contenir formaldéhyde, (methyl)acrylate, styrène, ....

Par exemple, une couche de revêtement isolant a une épaisseur comprise entre 0.3 et 0.7 mm. Avantageusement, plusieurs couches, par exemple entre 2 et 8 couches, par exemple 5 couches peuvent être appliquées, pour obtenir une épaisseur comprise entre 1 mm et 5 mm, par exemple entre 2 mm et 3 mm.

Le revêtement isolant est de préférence appliqué sur la surface intérieure de l'enceinte et est recouverte par une plaque en matériau conducteur thermique.

Le revêtement isolant est appliquée sur la surface intérieure de l'enceinte et/ou sur la plaque en matériau conducteur thermique.

Le revêtement isolant est de préférence appliquée sur les plaques en matériau conducteur thermique (Alu ou Inox) qui sont ensuite appliquées à l'intérieure de l'enceinte à l'aide d'un silicone haute température et/ou également vissées.

L'isolant a de préférence une conductivité thermique comprise entre 0.001 et 0.40 W/mK , 0.01 et 0.40 W/mK, 0.05 et 0.40 W/mK, de préférence entre 0.10 et 0.35 W/mK.

L'isolant a de préférence une résistance thermique comprise entre 150 et 250°C.

Dans certains cas, l'isolant peut avoir une résistance à la compression comprise entre 400 - 550 MPa.

Dans certains cas, l'isolant peut avoir une résistance à la flexion comprise entre 350 - 450 MPa.

L'isolant peut avoir une rigidité diélectrique comprise entre 10 - 20 kV/mm.

Une plaque en matériau conducteur thermique recouvre la couche d'isolant. Le matériau conducteur thermique a de préférence une conductivité thermique comprise entre 230 et 400 W/m.K.

De préférence, la plaque en matériau conducteur thermique comprend de l'aluminium et/ou de l'inox. De préférence, la plaque en matériau conducteur thermique est en aluminium, en inox ou en cuivre.

La plaque en matériau conducteur thermique a de préférence un coefficient de conductivité thermique compris entre 200 et 400 W.m⁻¹K⁻¹, de préférence entre 220 et 395 W.m⁻¹K⁻¹, et de préférence entre 230 et 300 W.m⁻¹K⁻¹.

La plaque en matériau conducteur thermique a de préférence un faible coefficient de dilatation linéaire, c'est-à-dire le coefficient de dilatation linéaire de 20 à 100°C est compris entre 15 x 10⁻⁶ et 30 x 10⁻⁶.

De préférence, la plaque en matériau conducteur thermique recouvre de préférence au moins 70% la couche d'isolant, de préférence 80%, de préférence 90%, de préférence l'intégralité de la couche d'isolant.

De préférence, l'épaisseur de la plaque en matériau conducteur thermique est comprise entre 1 et 5 mm, de préférence entre 1 et 3mm. Cela permet d'avoir une rigidité suffisante pour son intégration dans l'enceinte et lui confère une bonne durabilité, sans alourdir inconsidérément le dispositif et la masse métallique à chauffer.

La plaque en matériau conducteur peut avantageusement être renforcée mécaniquement par une couche en composite organique comme de la Bakelite et du Frathernit.

La plaque en matériau conducteur est fixée sur la couche d'isolant à l'aide de moyen de fixation permettant d'assurer une résistance mécanique suffisante comme par exemple une vis en inox.

Le matériau expansé ou alvéolaire ou mousse moulé dans la chambre vapeur de l'invention peut par exemple être du polystyrène, du polypropylène, du polyéthylène et/ou du polystyrène/polyéthylène.

La demanderesse a été surprise par l'efficacité du revêtement isolant pour réduire la consommation de vapeur dans le procédé de moulage. La mise en œuvre de ce revêtement étant simple, elle a imaginé isoler d'autres parties de l'appareillage.

L'invention s'étend donc également, de façon plus générale à l'utilisation d'un revêtement isolant thermique pour isoler au moins en partie un dispositif de moulage à la vapeur de matériaux expansés ou alvéolaires ou mousses.

Avantageusement, le revêtement isolant peut être appliqué sur le cadre de l'enceinte de moulage, à l'intérieur et/ou à l'extérieur des chambres à vapeur, qu'elles soient fixe ou mobiles, et/ou sur la surface extérieure des conduits ou zones de passage de vapeur.

De préférence, le revêtement isolant n'est pas en contact avec la vapeur. Lorsqu'il est appliqué sur des zones internes de la chambre, il est de préférence recouvert de façon étanche à l'eau par une couche protectrice.

L'invention est relative à un procédé de fabrication d'une chambre pour le moulage à la vapeur de matériaux expansés ou alvéolaires ou mousses comprenant une enceinte comprenant au moins deux parties, au moins une partie étant mobile pour permettre son ouverture et sa fermeture, l'enceinte comprenant au moins une arrivée de vapeur, et au moins un injecteur des billes alvéolaires, caractérisée en ce que les surfaces de l'enceinte et/ou l'arrivée de vapeur sont au moins en partie recouvertes par un revêtement isolant thermique.

De préférence, la surface extérieure des arrivées de vapeur est recouverte au moins à 50% par du revêtement isolant, de préférence au moins à 70%, de préférence au moins à 90%.

De préférence, la surface intérieure de l'enceinte est recouverte au moins à 50% par du revêtement isolant, de préférence au moins à 70%, de préférence au moins à 90%.

Le revêtement isolant, en particulier lorsqu'il est appliqué sur la surface intérieure de l'enceinte est agencé pour ne pas être en contact direct avec la vapeur. Cela implique qu'il peut être recouvert d'une couche protectrice étanche à l'eau. Il peut par exemple s'agir d'une couche polymérique, d'une peinture hydrophobe, d'une plaque en plastique ou autre matériau adéquat, ou de la plaque en matériau conducteur. Des joints étanches peuvent être ajoutés, notamment lorsque des matériaux rigides sont utilisés, pour sceller les contours et empêcher toute infiltration de vapeur.

De préférence, le revêtement isolant a une épaisseur comprise entre 1 et 5 mm, de préférence entre 2 et 4 mm.

L'invention sera mieux comprise à l'aide de la description de plusieurs modes de réalisations, correspondant au dessin sur lequel :

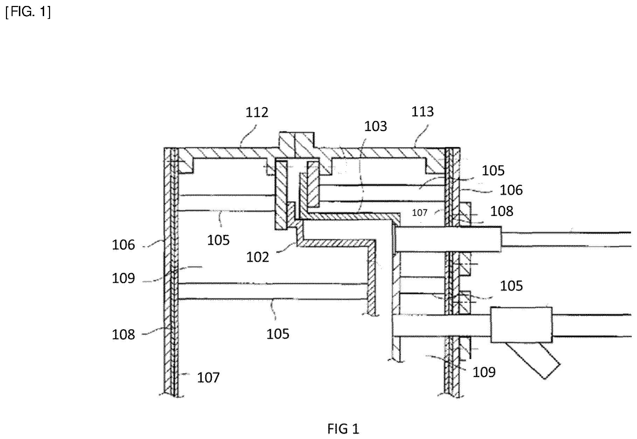

- La figure 1 représente une chambre vapeur selon l'art antérieur (JP3874708)
- La figure 2 représente, une vue en perspective, d'un premier mode de réalisation d'une chambre pour le moulage à la vapeur de matériaux expansés ou alvéolaires ou mousses en configuration ouverte obtenue selon l'invention
- La figure 3 représente, une vue de côté de la chambre de la figure 2 en configuration fermée.
- La figure 4 est un schéma explosé en coupe de la chambre à vapeur de la figure 2 en configuration ouverte.
- La figure 5 est une vue en perspective d'un déflecteur de vapeur agence dans la chambre de la figure 2.
- La figure 6 est une vue schématique en coupe d'un agencement des différentes couches de l'enceinte de la figure 2.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques suffisantes pour conférer un avantage technique et/ou pour différencier l'invention par rapport à l'état de la technique antérieur.

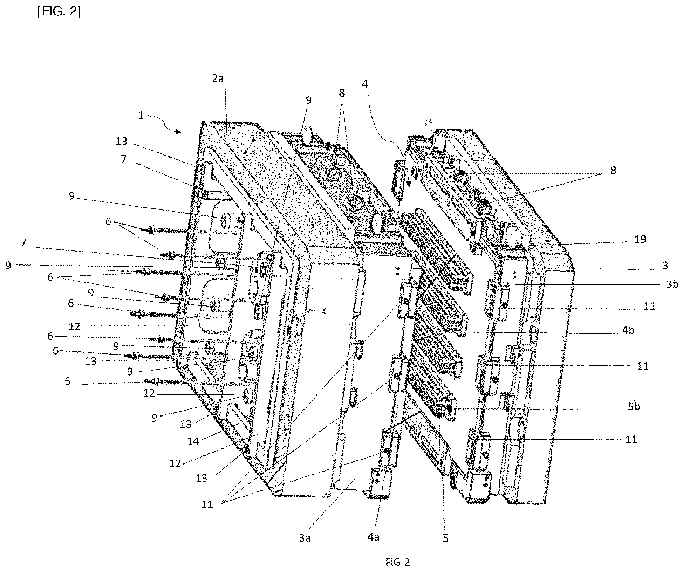

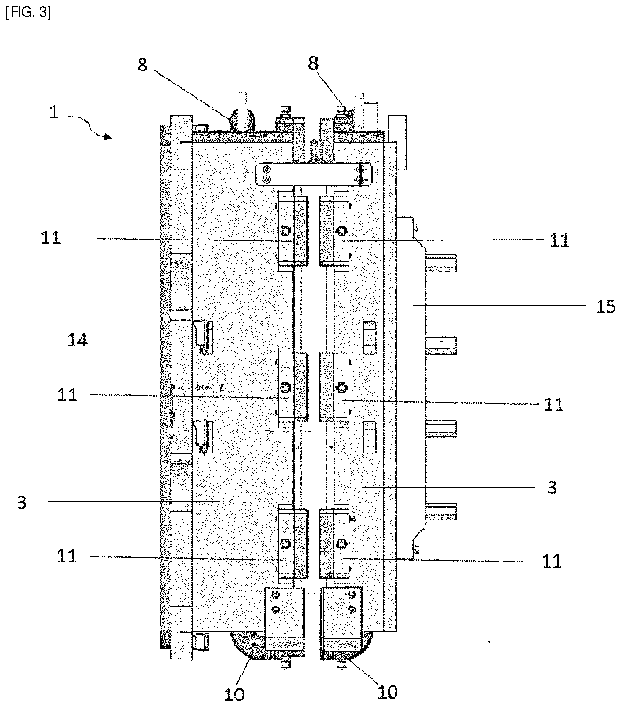

En référence aux figures 2 à 6, une chambre 1 pour le moulage à la vapeur de matériaux expansés ou alvéolaires ou mousses comprend une enceinte 3 avec au moins deux parties distinctes, 3a et 3b. La partie 3a est ici mobile alors que la partie 3b est fixe, pour permettre l'ouverture et la fermeture de l'enceinte 3. La partie fixe 3b coopère ici avec la partie mobile 3a lors de son fonctionnement pour permettre la production de pièce moulée.

Dans cet exemple non limitatif, l'enceinte 3 comprend un moule 4 avec des empreintes perforées 5, ici quatre empreintes 5 sont représentées. Le moule 4 est constitué d'une carcasse ayant pour rôle de maintenir les empreintes perforées 5 servant à obtenir la forme de pièce désirée.

Le moule 4 est en deux parties distinctes avec une partie 4a associée à la partie 3a de l'enceinte et une autre partie 4b associée à la partie 3b de l'enceinte.

La partie 4a du moule 4 supporte une partie poinçon de l'empreinte 5. L'autre partie 4b du moule supporte la partie matrice 5b de l'empreinte perforée 5. Lorsque l'enceinte est fermée, les deux parties 5a et 5b des empreintes sont associées de façon à délimiter le volume de la pièce à mouler.

L'intérieur des empreintes 5 est destiné à être en contact avec les matériaux expansés ou alvéolaires ou mousses. Ces empreintes sont ici par exemple en aluminium. Elles sont perforées. Les perforations des empreintes sont dimensionnées de façon à être plus petites que les billes de matériau alvéolaire, mais suffisamment grandes pour permettre le passage de vapeur vers l'intérieur de l'empreinte, à travers ces billes.

Le moule 4 comprend un système d'éjection 6 de la pièce moulée. Le système d'éjection comprend ici huit éjecteurs 6, traversant la grande face de la partie mobile 3a de l'enceinte et débouchent à l'intérieur des empreintes 5. Les éjecteurs 6, lorsqu'ils sont actionnés, quand le moule 4 est ouvert, exercent une pression sur la pièce moulée pour la détacher.

L'enceinte 3 comprend un cadre rigide et des faces latérales, sur lesquelles sont agencées des systèmes de connexions fluidiques entre l'intérieur de l'enceinte et l'extérieur de l'enceinte.

Il s'agit notamment ici d'une arrivée d'eau 7, ici deux arrivées d'eau, traversant la grande face de la partie mobile 3a de l'enceinte et destiné à conduire de l'eau liquide vers des sprays agencés dans l'enceinte, orientés vers les empreintes 5. Cette eau est destinée à refroidir les empreintes 5 pour figer le matériau après cuisson. L'arrivée d'eau 7 participe au refroidissement de la cavité du moule 4. L'arrivée d'eau 7 est agencé pour fonctionner de façon discontinue et est bien connu de l'homme du métier.

Des arrivées de vapeur 8, ici quatre arrivées de vapeur, sont également localisés en vis à vis sur les deux parties opposées de l'enceinte 3a et 3b, sur le haut de l'enceinte. Ils sont destinés à faire pénétrer la vapeur dans l'enceinte 3, et dans le moule 4 de façon à ce qu'elle traverse les empreintes 5, pour la soudure du matériau alvéolaire.

Ici également, comme c'est généralement le cas, les arrivées de vapeur 8 peuvent également fonctionner comme arrivées d'air, pour participer à l'éjection de la pièce de l'empreinte lors de son ouverture.

Des injecteurs des billes alvéolaires 9, ici huit injecteurs, traversent la grande face de la partie mobile 3a de l'enceinte et débouchent à l'intérieur des empreintes perforées 5 du moule 4 (non représenté).

L'injecteur de billes 9 est agencé pour fonctionner de façon discontinue et est bien connu de l'homme du métier.

Des valves (non représentées) permettent d'ouvrir et fermer ces divers injecteurs au moments judicieux du cycle de moulage.

Le matériau expansé ou alvéolaire ou mousse introduit dans les empreintes via les injecteurs 9 peut par exemple être du polystyrène, du polypropylène, du polyéthylène et/ou du polystyrène/polyéthylène.

L'enceinte 3 comprend également au moins un conduit pour l'application du vide 10 pour extraire l'air et le gaz encore présents dans le moule après la phase de refroidissement par l'eau. De préférence, le conduit d'application de vide est connecté à une pompe à vide placée à proximité de la chambre 1. Cet équipement est bien connu par l'homme du métier.

L'enceinte 3 comprend des moyens de verrouillage 11 prévus pour maintenir l'enceinte 3 fermée de façon étanche pendant les injections successives de billes dans les empreintes 5, de vapeur et d'eau vers les empreintes 5. Ces moyens de verrouillage 11 peuvent être des attaches en deux parties, placées en vis-à-vis sur le pourtour des parties 3a et 3b de l'enceinte. Elles coopèrent entres elles lors de la fermeture de la chambre 1. Ici, douze attaches (trois par face de l'enceinte) sont fixées sur les parties latérales 3a et 3b de l'enceinte. Le nombre et/ou le type d'attaches peut dépendre des dimensions de la chambre.

L'enceinte 3 comprend des moyens de renfort comme par exemple ici des raidisseurs 12 placés le long de la face latérale de la partie 3a de l'enceinte. Les extrémités des raidisseurs sont fixées à l'aide de vis 13 au cadre arrière 14 de la partie 2a de la chambre additionnelle. Ces vis 13 peuvent être par exemple de type FH M12 x 60mm.

La partie 3b de l'enceinte comprend sur sa partie arrière un circuit d'arrosage 15 afin de réguler la température du moule 4.

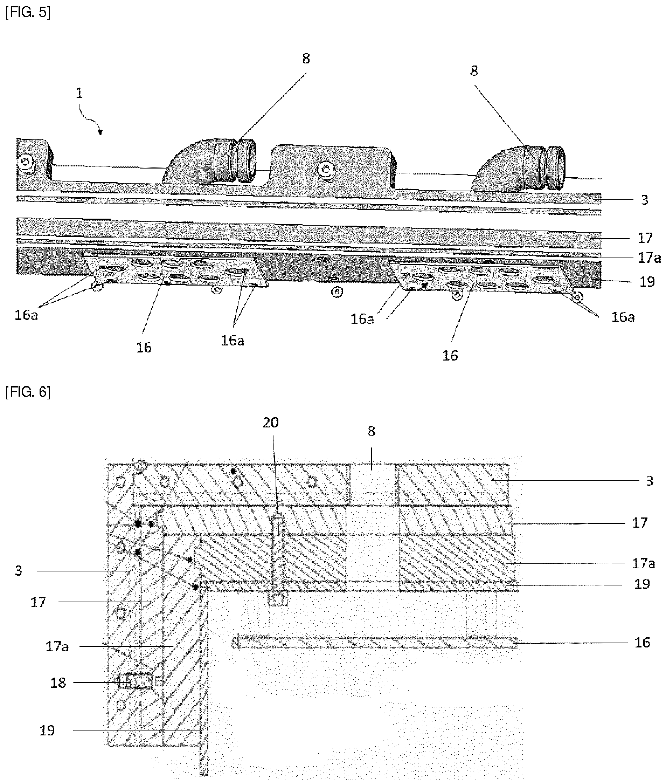

Des déflecteurs de vapeur 16 agencé dans l'enceinte 3 face à l'entrée de vapeur pour garantir une dispersion plus rapide de la vapeur dans l'enceinte (Figure 5). Le déflecteur 16 est par exemple fixé à quelques centimètres de l'entrée de vapeur 8 sur la plaque à l'aide de vis 16a.

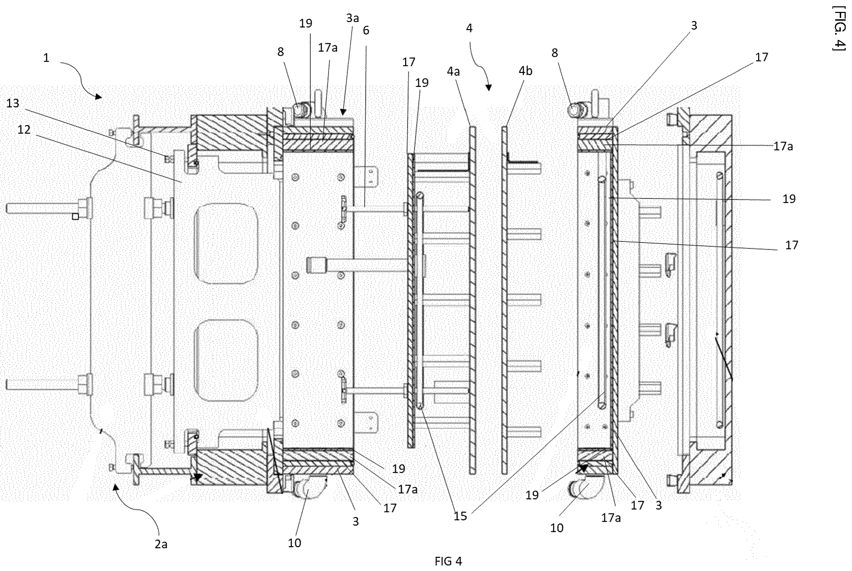

Une couche d'isolant 17, ici par exemple une couche rigide de résine époxy, est placée sur les faces intérieur de l'enceinte 3 (figure 4), en particulier sur les faces latérales (sur lesquelles l'enceinte s'ouvre) ainsi que sur les grandes faces. Des plaques 19 en métal conducteur recouvrent l'isolant.

La couche d'isolant 17 comprend ici deux couches 17 et 17a. Elle est assemblée à l'intérieur de l'enceinte 3 par un système de tenon et mortaise au niveau des angles (figure 6) afin d'éviter l'accès de la vapeur aux arêtes et/ou aux coins du cadre, et ainsi éviter la formation de condensation.

La couche d'isolant 17, 17a est positionnée et fixée sur les quatre côtés du cadre de l'enceinte 3 par exemple à l'aide de vis 18.

La composition bicouche de l'isolant permet d'augmenter et/ou de combiner les propriétés thermiques de l'isolant. Sur la figure 5, une couche d'isolant additionnelle 17a recouvre la couche d'isolant 17.

L'isolant 17, 17a peut avoir une épaisseur totale comprise entre 15 et 45 mm. Il est possible d'avoir des épaisseurs différentes entre 17 et 17a. Il est également envisageable de combiner plus de deux couches.

Les isolants 17 et 17a sont choisis selon des critères techniques tels qu'une bonne résistance thermique et mécanique, un faible coefficient de dilatation, et une bonne stabilité à la chaleur et à l'humidité au cours du temps d'utilisation. Par exemple un isolant peut être une résine époxy.

Des exemples de plages optimales sur les propriétés mécaniques des isolants sont décrites dans le tableau 1 ci-dessous :

**[Table 1]**

| **Critères techniques** | **Méthode de test** | **Plage de valeur** |
|---|---|---|
| Densité (en g/cm³) | ISO 1183 | 1.70 - 2 |
| Conductivité thermique (en W/mK) | ISO 8302 | 0.20 - 0.40 |
| Résistance thermique (en °C) | CEI 216 | 150 - 250 |
| Résistance à la compression (en MPa) | ISO 604 | 400 - 550 |
| Résistance à la flexion (en MPa) | ISO 178 | 350 - 450 |
| Rigidité diélectrique (en kV/mm) | CEI 243-1 | 10 - 20 |

Un exemple non limitant d'isolant approprié pour la présente invention est celui vendu sous le nom commercial Deltherm 68.890 vendu par la société BASFF Thermal Engineering SRL ou encore EPGM 203 par la société Melpro SAS.

La plaque en matériau conducteur thermique 19 recouvrant est ici plaque en aluminium, matériau choisi pour ses propriétés autant que pour son prix abordable. D'autres matériaux sont toutefois envisageables, comme par exemple l'inox ou le cuivre, ou des alliages ou des composites.

Les caractéristiques du cuivre, de l'inox et de l'aluminium sont détaillées à titre d'exemple dans le tableau 2 ci-dessous :

**[Table 2]**

| | Aluminium | Inox | Cuivre |
|---|---|---|---|
| Conductivité thermique (W-m⁻¹-K⁻¹) | 237 | 15-20 | 390 |
| Coefficient de dilatation linéaire de 20° à 100°C | 15 x 10⁻⁶ | 16.5 x 10⁻⁶ | 30 x 10⁻⁶ |
| Densité (en g/cm3) | 2.7 | 7.8-7.9 | 8.96 |
| Point de fusion (en °C) | 660.3 | | 1085 |
| Coefficient de Poisson | 0.24 à 0.33 | | 0.33 |
| Module de Young (en GPa) | 69 | 200 | 124 |
| Chaleur massique (en J.k⁻¹.kg⁻¹) | 897 | 500 | 385 |

Le matériau conducteur thermique 19 a de préférence une conduction thermique comprise entre 230 et 450 W-m⁻¹-K⁻¹. La conductivité thermique d'un matériau est une grandeur physique qui caractérise sa capacité à diffuser la chaleur dans les milieux sans déplacement macroscopique de matière. Par conséquent, l'aluminium et le cuivre ont une bonne conductivité.

La plaque en matériau conducteur thermique 19 a de préférence un faible coefficient de dilatation linéaire, c'est-à-dire le coefficient de dilatation linéaire de 20 à 100°C compris entre 15 x 10⁻⁶ et 30 x 10⁻⁶.

La plaque en matériau conducteur thermique 19 recouvre ici la quasi-totalité de la surface de l'isolant, qui lui-même recouvre la quasi-totalité de la paroi intérieure de l'enceinte. Même si une couverture moins importante serait probablement moins efficace, elle serait tout de même plus profitable que de ne pas en avoir. Le matériau conducteur recouvre donc de préférence au moins 70% la couche d'isolant 17 ou 17a, de préférence 80%, de préférence 90%, de préférence l'intégralité de la couche d'isolant 17 ou 17a.

De préférence, l'épaisseur de la plaque en matériau conducteur thermique 19 est ici de 5mm. Cela permet d'avoir une rigidité suffisante pour son intégration dans l'enceinte 3 et lui confère une bonne durabilité, sans alourdir inconsidérément le dispositif et la masse métallique à chauffer.

Les plaques 19 sont fixées à l'isolant 17, 17a à l'aide de vis 20, ici en inox pour résister aux conditions humides prévues à l'intérieur de l'enceinte, et ne gênent aucunement les propriétés de la plaque 19.

Un exemple non limitant d'une plaque en matériau conducteur thermique 19 approprié pour la présente invention est celui vendu sous le nom commercial AG 3C 5083 vendu par Eyrolliage^{®}.

Les caractéristiques de la plaque AG 3C 5083 sont décrites dans le tableau 3 ci-dessous :

**[Table 3]**

| | Plaque AG 3C 5083 |
|---|---|
| Module d'élasticité (en MPa) | 71000 |
| Module de rigidité (en MPa) | 26800 |
| Coefficient de poisson (en v) | 0.33 |
| Température de solidité (en °C) | 580 |
| Température de fusion (°C) | 640 |
| Chaleur spécifique (en J kg-1 K-1) | 899 |
| Coefficient de dilatation thermique (en µm m-1 K-1) | 23.8 |
| Densité (en kg m-3) | 2660 |
| Résistivité (en nΩm) | 60 |
| Conductivité thermique (en λ) | 117 |
| Conductivité électrique (en %IACS) | 28.5 |

Les figures 2 à 6 illustrent un mode de réalisation particulier de la chambre obtenue par le procédé de l'invention. L'homme du métier connait dans son ensemble le principe de fonctionnement de telles chambres et les variations techniques qui peuvent y être apportées, selon le type de matériau alvéolaire utilisé, la taille et la forme des pièces à mouler, etc...

L'innovation se situe ici au niveau de la couche isolante 17 combinée à une plaque en matériau conducteur thermique 19.

Lors d'un process de moulage de pièces, dans un premier temps, l'enceinte est fermée, des billes de mousse alvéolaires sont injectées dans les empreintes 5, de la vapeur est ensuite injectée dans l'enceinte 3 et le moule 4 de façon à pénétrer dans les empreintes 5 pour souder les billes alvéolaires. De l'eau liquide est ensuite projetée à l'aide d'un spray sur les empreintes pour figer les pièces moulées. Une étape de vide permet d'extraire l'humidité résiduelle et accélère la stabilisation de la pièce moulée. L'enceinte 3 est ensuite ouverte, les éjecteurs 6 de pièce actionnés et/ou un flux d'air appliqué pour éjecter les pièces. L'enceinte 3 est ensuite refermée pour un nouveau cycle.

Grâce à l'isolation combinée aux plaques en matériau conducteur 19, la déperdition énergétique du process est considérablement diminuée. Seules les plaques en matériau conducteur 19 sont soumises aux variations de températures à chaque cycle, ce qui représente un volume de matière bien inférieur au cadre et parois de l'enceinte. De plus, la température des plaques en matériau conducteur 19 ne descend pas considérablement lors de la phase de refroidissement de la pièce, permettant ainsi à l'humidité introduite dans la chambre (vapeur, spray d'eau) de ne pas se condenser sur ces parois et dans la chambre en général, évitant les défauts de fabrication dues à la condensation.

Une autre implémentation de l'invention a également été réalisée, en remplaçant les plaques isolantes 17 et 17a par un revêtement isolant.

Le revêtement isolant thermique est ici une peinture hydrophobe blanche comprenant un mélange de polymères styrène et acryliques (formaldéhyde, méthylacrylate et styrene) dans une base aqueuse, des inhibiteurs et retardeurs de feu et des additif céramique microgranulaires à cellules fermées ayant une conductivité thermique autour de 1 mW/m.°C par couche a été appliquée au pinceau en plusieurs couches (typiquement 5 couches de 0.5 mm) jusqu'à obtention d'une couche de 2-3 mm sur la surface intérieure de l'enceinte (à la place de l'isolant 17 et 17a) et recouvert d'une plaque conductrice en aluminium (2.5 mm d'épaisseur). Un joint étanche, ici un joint en silicone acétique pour application en haute température, est déposé en pourtour de façon à empêcher tout contact entre la vapeur du process et la peinture.

De la peinture a en outre été appliquée au pinceau avec une épaisseur de 1.5 à 5 mm sur les parties extérieures et visibles de la machine, dans lesquelles circule de la vapeur.

Un cycle de production standard a été mené. Il a été observé que la température relevée sur la face externe de l'enceinte est 50% inférieure à la température relevée pour une même production sans peinture (43.8°C contre 84.2 °C sans isolant). La consommation de vapeur est diminuée de 39% par rapport à un cycle sans isolation.

Il est anticipé qu'en isolant toute la chambre, l'économie de vapeur puisse atteindre les 50%.

La peinture aurait également pu être appliquée au pistolet. Pour améliorer l'adhésion de la peinture sur les différentes surfaces, la première couche peut être diluée avec de l'eau, par exemple à 50% en volume.

L'invention est définie par les revendications jointes.

## Revendications

1. Procédé de fabrication d'une chambre pour le moulage à la vapeur (1) de matériaux expansés ou alvéolaires ou mousses comprenant une enceinte (3) comprenant au moins deux parties (3a, 3b), au moins une partie étant mobile (3a) pour permettre son ouverture et sa fermeture, l'enceinte (3) comprenant une plaque en matériau conducteur thermique, au moins une arrivée de vapeur (8), et au moins un injecteur de billes alvéolaires (9), ledit procédé étant **caractérisé en ce qu'**on applique un matériau fluide ou semi-fluide par étalement, en particulier à l'aide d'un pinceau ou d'un rouleau à peinture, ou par projection, en particulier à l'aide d'un spray ou un pistolet à peinture, sur une surface intérieure de l'enceinte et/ou sur la plaque en matériau conducteur thermique, pour obtenir, après séchage, une couche isolante d'épaisseur allant de quelques microns à quelques millimètres, et on recouvre la surface intérieure de l'enceinte par la plaque en matériau conducteur thermique de manière à recouvrir la couche isolante.

2. Procédé selon la revendication 1, dans lequel on applique en tant que matériau fluide ou semi-fluide un matériau qui comprend des particules minérales, en particulier de la céramique ou du verre.

3. Procédé selon la revendication 2, dans lequel on applique en tant que matériau fluide ou semi-fluide un matériau dont les particules minérales comprennent des microsphères isolantes à microbulle, des microsphères creuses en verre, en particulier en borosilicate, et/ou des micro-corps creux en céramique.

4. Procédé selon l'une des revendications 1 à 3, dans lequel on applique en tant que matériau fluide ou semi-fluide une peinture hydrophobe blanche comprenant un mélange de polymères styrène et acryliques dans une base aqueuse.

5. Procédé selon l'une des revendications 1 à 4, dans lequel on recouvre au moins 50%, de préférence au moins 70%, plus préférentiellement 90%, d'une surface extérieure des arrivées de vapeur de matériau fluide ou semi-fluide.

6. Procédé selon l'une des revendications 1 à 5, dans lequel on recouvre au moins 50%, de préférence au moins 70%, plus préférentiellement 90%, de la surface intérieure de l'enceinte (3) de matériau fluide ou semi-fluide.

7. Procédé selon l'une des revendications 1 à 6, dans lequel la plaque en matériau conducteur thermique (19) comprend de l'aluminium, de l'inox et/ou du cuivre.

8. Procédé selon l'une des revendications 1 à 7, dans lequel la plaque en matériau conducteur thermique (19) a un coefficient de conductivité thermique compris entre 200 et 400 W.m-1K-1.

9. Procédé selon l'une des revendications 1 à 8, dans lequel la plaque en matériau conducteur thermique (19) a un coefficient de dilatation linéaire de 20 à 100°C compris entre 15 x 10-6 et 30 x 10-6.

10. Procédé selon l'une des revendications 1 à 9, dans lequel l'épaisseur de la plaque en matériau conducteur thermique (19) est comprise entre 2 et 5 mm.

11. Procédé selon l'une des revendications 1 à 10, dans lequel la couche isolante obtenue a une épaisseur comprise entre 1 et 5 mm, de préférence entre 2 et 4 mm.

12. Procédé selon l'une des revendications 1 à 11, selon lequel on applique le matériau fluide ou semi-fluide sur un cadre de l'enceinte de moulage, à l'intérieur d'une chambre pour le moulage à vapeur, et/ou sur les surfaces extérieures des conduits ou zones de passage de vapeur.

## Patentansprüche

1. Verfahren zur Herstellung einer Kammer (1) zum Dampfformen von geschäumten oder zellulären Materialien oder Schaumstoffen, das ein Gehäuse (3) mit mindestens zwei Teilen (3a, 3b) umfasst, wobei mindestens ein Teil (3a) beweglich ist, um das Gehäuse öffnen und schließen zu können, wobei das Gehäuse (3) eine Platte aus wärmeleitendem Material, mindestens einen Dampfeinlass (8) und mindestens eine Einspritzdüse für Schaumstoffkügelchen (9) umfasst und das Verfahren **dadurch gekennzeichnet ist, dass** ein flüssiges oder halbflüssiges Material, insbesondere mit einem Pinsel oder einer Farbrolle aufgetragen wird, oder durch Projektion, insbesondere mit einem Spray oder einer Farbspritzpistole, auf eine Innenfläche des Gehäuses und/oder auf die Platte aus wärmeleitendem Material aufgesprüht wird, damit eine Isolierschicht mit einer Dicke von einigen Mikrometern bis zu einigen Millimetern nach der Trocknung entsteht, und die Innenfläche des Gehäuses mit der Platte aus wärmeleitendem Material beschichtet wird, sodass die Isolierschicht bedeckt ist.

2. Verfahren nach Anspruch 1, bei dem als flüssiges oder halbflüssiges Material ein Material verwendet wird, das mineralische Partikel enthält, insbesondere Keramik- oder Glaspartikel.

3. Verfahren nach Anspruch 2, bei dem ein Material als flüssiges oder halbflüssiges Material verwendet wird, dessen Mineralpartikel isolierende Mikrokügelchen mit Mikrobläschen, hohle Mikrokügelchen aus Glas, insbesondere aus Borosilikatglas, und/oder hohle Mikrokörper aus Keramik umfassen.

4. Verfahren nach einem der Ansprüche 1 bis 3, bei dem als flüssiges oder halbflüssiges Material eine weiße, wasserabweisende Farbe aufgebracht wird, die eine Mischung aus Styrol- und Acrylpolymeren in einer wässrigen Lauge enthält.

5. Verfahren nach einem der Ansprüche 1 bis 4, bei dem mindestens 50 %, vorzugsweise mindestens 70 %, noch bevorzugter 90 % einer Außenfläche der Dampfeinlässe mit einem flüssigen oder halbflüssigen Material beschichtet werden.

6. Verfahren nach einem der Ansprüche 1 bis 5, bei dem mindestens 50 %, vorzugsweise mindestens 70 %, noch bevorzugter 90 % der Innenfläche des Gehäuses (3) mit einem flüssigen oder halbflüssigen Material beschichtet werden.

7. Verfahren nach einem der Ansprüche 1 bis 6, wobei die Platte aus wärmeleitendem Material (19) Aluminium, Edelstahl und/oder Kupfer enthält.

8. Verfahren nach einem der Ansprüche 1 bis 7, wobei die Platte aus wärmeleitendem Material (19) einen Wärmeleitkoeffizienten zwischen 200 und 400 W.m⁻¹·K⁻¹ aufweist.

9. Verfahren nach einem der Ansprüche 1 bis 8, wobei die Platte aus wärmeleitendem Material (19) bei 20 bis 100 °C einen linearen Ausdehnungskoeffizienten zwischen 15 × 10⁻⁶ und 30 × 10⁻⁶ aufweist.

10. Verfahren nach einem der Ansprüche 1 bis 9, bei dem die Platte aus wärmeleitendem Material (19) zwischen 2 und 5 mm dick ist.

11. Verfahren nach einem der Ansprüche 1 bis 10, wobei die erhaltene Isolierschicht zwischen 1 und 5 mm, vorzugsweise zwischen 2 und 4 mm, dick ist.

12. Verfahren nach einem der Ansprüche 1 bis 11, bei dem das flüssige oder halbflüssige Material auf einen Rahmen des Formgehäuses in eine Dampfformkammer und/oder auf die Außenflächen der Dampfkanäle oder - Durchgangs Bereiche aufgebracht wird.

## Claims

1. A Method for manufacturing a chamber for steam moulding (1) of expanded or cellular materials or foams -comprising an enclosure (3) comprising at least two parts (3a, 3b), at least one part being movable (3a) for enabling its opening and closure, the enclosure (3) comprising a plate of thermally conductive material, at least one steam inlet (8), and at least one cellular bead injector (9), said method being **characterized in that** a fluid or semi-fluid material is applied by spreading, in particular by means of a brush or paint roller, or by spraying, in particular by means of a spray or a paint gun, on an inner surface of the enclosure and/or on the thermally conductive material plate, for obtaining, after drying, an insulating layer of thickness ranging from a few microns to a few millimeters, and the inner surface of the enclosure being covered by the thermally conductive material plate in order to cover the insulating layer.

2. The method according to claim 1, wherein a material which comprises mineral particles, in particular ceramic or glass, is applied as a fluid or semi-fluid material.

3. The method according to claim 2, wherein a material whose mineral particles comprising microbubble insulating microspheres, hollow glass microspheres, in particular borosilicate, and/or ceramic hollow microbodies are applied as a fluid or semi-fluid material.

4. The method according to one of claims 1 to 3, wherein a white hydrophobic paint comprising a mixture of styrene and acrylic polymers in an aqueous base is applied as a fluid or semi-fluid material.

5. The method according to one of Claims 1 to 4, wherein at least 50%, preferably at least 70%, more preferably 90%, is covered with an outer surface of the steam inlets of fluid or semi-fluid material.

6. The method according to one of claims 1 to 5, wherein at least 50%, preferably at least 70%, more preferably 90%, of the inner surface of the enclosure (3) is covered with fluid or semi-fluid material.

7. The method according to one of claims 1 to 6, wherein the plate of thermally conductive material (19) comprises aluminum, stainless steel and/or copper.

8. The method according to any one of claims 1 to 7, wherein the plate of thermally conductive material (19) has a thermal conductivity coefficient between 200 and 400 W.m-1K-1.

9. The method according to one of claims 1 to 8, wherein the plate of thermally conductive material (19) has a coefficient of linear expansion from 20 to 100°C between 15 x 10-6 and 30 x 10-6.

10. The method according to one of claims 1 to 9, wherein the thickness of the plate of thermally conductive material (19) is between 2 and 5 mm.

11. The method according to one of Claims 1 to 10, wherein the obtained insulating layer has a thickness between 1 and 5 mm, preferably between 2 and 4 mm.

12. The method according to any one of claims 1 to 11, wherein the fluid or semi-fluid material is applied on a frame of the enclosure of the molding chamber, inside a chamber for steam molding, and/or to the outer surfaces of the steam passage or lines of the chambers.
